# EUROPEAN PATENT APPLICATION

(11) **EP 3 057 049 A1**
(43) Date of publication of application: **17.08.2016**
(21) Application number: 14852556.1
(22) Date of filing: 30.09.2014
(51) Int. Cl.: G06Q 20/12, G06Q 20/38, G06Q 20/34

(54) **ELECTRONIC TRANSACTION METHOD AND SYSTEM, AND PAYMENT PLATFORM SYSTEM**

(30) Priority: 08.10.2013 CN 201310464877
(71) Applicant: Baidu Online Network Technology (Beijing) Co., Ltd, Beijing 100085 (CN)
(72) Inventor: JIAO, Zhiyong, Beijing 100085 (CN); WANG, Chao, Beijing 100085 (CN); YU, Jianmei, Beijing 100085 (CN); LI, Haibo, Beijing 100085 (CN); LI, Haixia, Beijing 100085 (CN)
(74) Representative: Papa, Elisabetta
(86) International application number: PCT/CN2014/087914
(87) International publication number: WO 2015/051727

(57) **Abstract**

Proposed are an electronic transaction method and system, and a payment platform system. Used in the method are: a merchant transaction system; a banking system; a payment gateway; a payment platform system which communicates with the merchant transaction system through a transaction gateway and communicates with the banking system through the payment gateway. The method comprises the following steps: receiving, by a payment platform system, an agreement deduction request sent by a merchant transaction system; verifying, by the payment platform system, the agreement deduction request; and after the verification of the agreement deduction request, communicating, by the payment platform system, with a banking system so as to conduct a deduction according to the agreement deduction request and a preset payment deduction agreement. By means of the method in the embodiments of the present invention, it is not necessary for a user to skip to a payment platform system, thereby simplifying the flow and having the advantages of convenience, security and high efficiency.

## Description

### CROSS REFERENCE TO RELATED APPLICATION

This application claims priority to and benefits of Chinese Patent Application No. 201310464877.1, filed with State Intellectual Property Office of China on October 8, 2013, which is entitled as "Electronic Trading Method and System, and Payment Platform System" and submitted by BAIDU ONLINE NETWORK TECHNOLOGY (BEIJING) CO., LTD., the entire content of which is incorporated herein by reference.

### FIELD

The present disclosure generally relates to an Internet technology field, and more particularly, to an electronic trading method and system, and a payment platform system.

### BACKGROUND

With the increasing development of Internet technology, Internet has become an important part in people living, such that online shopping becomes more common. In the online shopping, to the buyer searches for product information via Internet and sends a shopping request in a form of electronic purchase order, and then after online payment, the seller sends out the product by post or delivers the product to the buyer's door by express. In order to ensure the safety of the trading, a guarantee trading platform is used usually during online payment, for example, Taobao Alipay, Baidu Alipay, Tencent Alipay, etc.

The guarantee trading platform is a third-party payment platform. When the user selects products on the seller's site and makes payment, the user must make a skip to the third-party payment platform, on which the user selects a payment mode (for example, online payment, credit card payment, bank account payment) and selects a payment tool (for example, an account of a certain bank) according to the payment mode, and then accomplishes the payment in accordance with actual procedures. However, if the buyer is subjected to network timeout, he needs to return to the shopping cart for re-ordering and re-paying, such that the user experience is poor.

### SUMMARY

The present disclosure aims to solve the above problems to at least some extent.

Accordingly, a first objective of the present disclosure is to provide an electronic trading method.

A second objective of the present disclosure is to provide an electronic trading system.

A third objective of the present disclosure is to provide a payment platform system.

In order to achieve above objectives, embodiments of a first aspect of the present disclosure provide an electronic trading method. The method is performed on: a merchant trading system used by a merchant and including a terminal used by a user and a merchant trading server; a trading gateway; a bank system; a payment gateway; and a payment platform system communicating with the merchant trading system via the trading gateway and communicating with the bank system via the payment gateway. The method includes: receiving by the payment platform system an agreement deduction request sent from the merchant trading system; verifying by the payment platform system the agreement deduction request; communicating between the payment platform system and the bank system so as to perform a deduction according to the agreement deduction request and a predetermined payment deduction agreement, after the agreement deduction request passes verification.

According to the electronic trading method in embodiments of the present disclosure, with the predetermined payment deduction agreement, the merchant trading system may directly deduct the payment according to the user's instruction or service terms in the agreement, without making a skip to the third-party payment platform, thus reducing procedure, being convenient, safe and efficient. In addition, if the network timeout occurs, the user only needs to send the agreement deduction request again, without the need of returning to the shopping cart for re-ordering and re-paying, thus improving the user experience and enhancing the success rate of payment. In addition, auto renew may be provided for the user, for example, it may help the user to automatically buy membership services, thus further improving the user experience.

In order to achieve above objectives, embodiments of a second aspect of the present disclosure provide an electronic trading system. The system includes: a merchant trading system used by a merchant, a trading gateway, a bank system, a payment gateway, and a payment platform system, in which the merchant trading system includes a terminal used by a user and a merchant trading server, the payment platform system communicates with the merchant trading system via the trading gateway and communicates with the bank system via the payment gateway, and the payment platform system is configured to receive an agreement deduction request sent from the merchant trading system, to verify the agreement deduction request, and to communicate with the bank system so as to perform a deduction according to the agreement deduction request and a predetermined payment deduction agreement after the agreement deduction request passes verification.

According to the electronic trading system in embodiments of the present disclosure, with the predetermined payment deduction agreement, the merchant trading system may directly deduct the payment according to the user's instruction or service terms in the agreement, without making a skip to the third-party payment platform, thus reducing procedure, being convenient, safe and efficient. In addition, if the network timeout occurs, the user only needs to send the agreement deduction request again, without the need of returning to the shopping cart for re-ordering and re-paying, thus improving the user experience and enhancing the success rate of payment. In addition, auto renew may be provided for the user, for example, it may help the user to automatically buy membership services, thus further improving the user experience.

In order to achieve above objectives, embodiments of a third aspect of the present disclosure provide a payment platform system. The payment platform system includes: an agreement deduction request receiving module, configured to receive an agreement deduction request sent from a merchant trading system; a first verifying module, configured to verify the agreement deduction request; and a deduction module, configured to communicate with a bank system so as to perform a deduction according to the agreement deduction request and a predetermined payment deduction agreement, after the agreement deduction request passes verification.

According to the payment platform system in embodiments of the present disclosure, with the predetermined payment deduction agreement, the merchant trading system may directly deduct the payment according to the user's instruction or service terms in the agreement, without making a skip to the third-party payment platform, thus reducing procedure, being convenient, safe and efficient. In addition, if the network timeout occurs, the user only needs to send the agreement deduction request again, without the need of returning to the shopping cart for re-ordering and re-paying, thus improving the user experience and enhancing the success rate of payment. In addition, auto renew may be provided for the user, for example, it may help the user to automatically buy membership services, thus further improving the user experience.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

These and other aspects and advantages of embodiments of the present disclosure will become apparent and more readily appreciated from the following descriptions made with reference to the accompanying drawings, in which:
Fig. 1 is a schematic diagram illustrating a system used by an electronic trading method according to an embodiment of the present disclosure;
Fig. 2 is a flow chart showing an electronic trading method according to an embodiment of the present disclosure;
Fig. 3 is a flow chart showing an electronic trading method according to another embodiment of the present disclosure;
Fig. 4 is a flow chart showing an electronic trading method according to yet another embodiment of the present disclosure;
Fig. 5 is a flow chart showing a payment and signing according to an embodiment of the present disclosure;
Fig. 6 is a flow chart showing an agreement deduction according to an embodiment of the present disclosure;
Fig. 7 is a schematic diagram showing an electronic trading system according to an embodiment of the present disclosure;
Fig. 8 is a schematic diagram showing a payment platform system according to an embodiment of the present disclosure;
Fig. 9 is a schematic diagram showing a payment platform system according to another embodiment of the present disclosure;
Fig. 10 is a schematic diagram showing a payment platform system according to yet another embodiment of the present disclosure.

### DETAILED DESCRIPTION

Reference will be made in detail to embodiments of the present disclosure. Embodiments of the present disclosure will be shown in drawings, in which the same or similar elements and the elements having same or similar functions are denoted by like reference numerals throughout the descriptions. The embodiments described herein according to drawings are explanatory and illustrative, not construed to limit the present disclosure. In contrast, the present disclosure may include alternatives, modifications and equivalents within the spirit and scope of the appended claims.

In the description of the present disclosure, it should be understood that, terms such as "first" and "second" are used herein for purposes of description and are not intended to indicate or imply relative importance or significance. In the description of the present disclosure, it should be noted that, unless specified or limited otherwise, the terms "mounted," "connected," and "coupled" and variations thereof are used broadly and encompass such as mechanical or electrical mountings, connections and couplings, also can be inner mountings, connections and couplings of two components, and further can be direct and indirect mountings, connections, and couplings, which can be understood by those skilled in the art according to the detail embodiment of the present disclosure. In addition, in the description of the present disclosure, the term "a plurality of" means two or more.

Any process or method described in a flow chart or described herein in other ways may be understood to include one or more modules, segments or portions of codes of executable instructions for achieving specific logical functions or steps in the process, and the scope of a preferred embodiment of the present disclosure includes other implementations, which should be understood by those skilled in the art.

In order to solve the problem in the related art that there are too many times of page jumps when using the third-party payment platform, embodiments of the present disclosure provide an electronic trading method, an electronic trading system, and a payment platform system, which will be described in the following with reference to the drawings.

The electronic trading method is performed on: a merchant trading system used by a merchant and including a terminal used by a user and a merchant trading server; a trading gateway; a bank system; a payment gateway; and a payment platform system communicating with the merchant trading system via the trading gateway and communicating with the bank system via the payment gateway. The method includes: receiving by the payment platform system an agreement deduction request sent from the merchant trading system; verifying by the payment platform system the agreement deduction request; and communicating between the payment platform system and the bank system so as to perform a deduction according to the agreement deduction request and a predetermined payment deduction agreement, after the agreement deduction request passes verification.

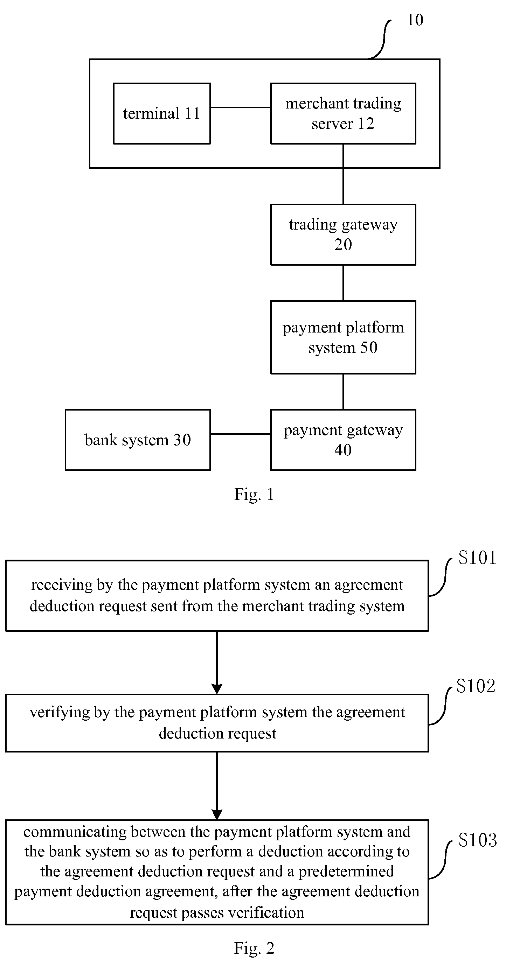

Fig. 1 is a schematic diagram illustrating a system used by an electronic trading method according to an embodiment of the present disclosure, and Fig. 2 is a flow chart showing an electronic trading method according to an embodiment of the present disclosure.

As shown in Fig. 1, the system used by the electronic trading method includes a merchant trading system 10 used by a merchant, a trading gateway 20, a bank system 30, a payment gateway 40 and a payment platform system 50, in which the merchant trading system 10 includes a terminal 11 used by a user and a merchant trading server 12, and the payment platform system 50 communicates with the merchant trading system 10 via the trading gateway 20 and communicates with the bank system 30 via the payment gateway 40.

As shown in Fig. 2, the electronic trading method includes following steps.

In S101, the payment platform system 50 receives an agreement deduction request sent from the merchant trading system 10.

Specifically, if it is the first time for the user to use the merchant trading system 10, the merchant trading system 10 may send the agreement deduction request as it generates a predetermined payment deduction agreement (which will be described in the following), for example, when the user selects the product and pays for the product, he/she may send the agreement deduction request via the merchant trading system 10. If the payment platform system 50 has generated a corresponding payment deduction agreement i.e. the predetermined payment deduction agreement (referring to following embodiments in detail), the merchant trading system 10 may send the agreement deduction request directly.

In S102, the payment platform system 50 verifies the agreement deduction request.

In S103, after the agreement deduction request passes verification, the payment platform system 50 communicates with the bank system 30, so as to perform a deduction according to the agreement deduction request and the predetermined payment deduction agreement.

According to the electronic trading method in embodiments of the present disclosure, with the predetermined payment deduction agreement, the merchant trading system may directly deduct the payment according to the user's instruction or service terms in the agreement, without making a skip to the third-party payment platform, thus reducing procedure, being convenient, safe and efficient. In addition, if the network timeout occurs, the user only needs to send the agreement deduction request again, without the need of returning to the shopping cart for re-ordering and re-paying, thus improving the user experience and enhancing the success rate of payment. In addition, auto renew may be provided for the user, for example, it may help the user to automatically buy membership services, thus further improving the user experience.

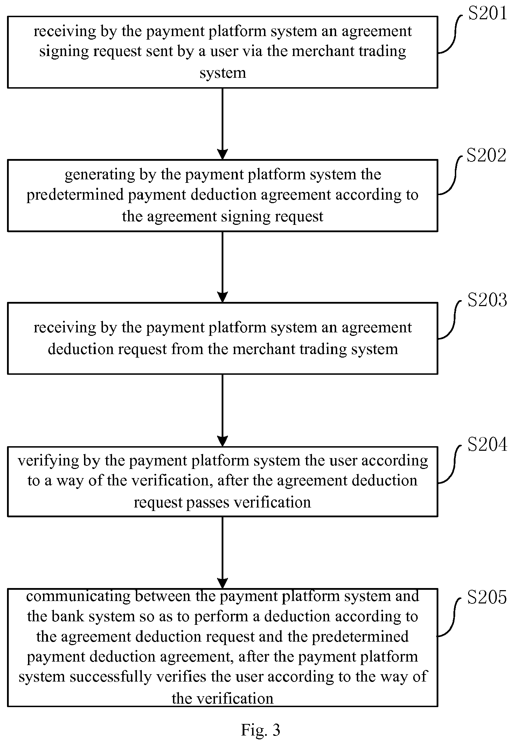

Fig. 3 is a flow chart showing an electronic trading method according to another embodiment of the present disclosure. The predetermined payment deduction may be generated according to an agreement signing request of the user. Specifically, as shown in Fig. 3, the electronic trading method includes following steps.

In S201, the payment platform system 50 receives an agreement signing request sent by the user via the merchant trading system 10.

Specifically, the merchant trading server 12 is a server deployed by the merchant. Firstly, the user logs in the merchant trading server 12 via the terminal 11. Then, the user selects the product information via the terminal 11, and sends the agreement signing request during paying or sends the agreement signing request directly. The merchant trading system 10 receives the agreement signing request and then forwards it to the payment platform system 50. The terminal 11 may be a mobile terminal (for example, a smartphone), also may be a personal computer, etc.

The agreement signing request is a request from the user for signing the payment deduction agreement among three parties, i.e., the user, the merchant trading system 10 and the payment platform system 50. In an embodiment of the present disclosure, the agreement signing request includes at least one of an identifier of the merchant, an identifier of the user in the merchant trading system 10 and an identifier of the user in the payment platform system 50. The identifier of the merchant, for example, the identifier of Taobao website, identifies the merchant solely. The identifier of the user in the merchant trading system 10 is a login account when the user logs in the merchant trading server 12, for example, the account of the user in Taobao website. The identifier of the user in the payment platform system 50 is a login account when the user logs in the payment platform system 50, for example, an Alipay account. Specifically, after the user logs in the merchant trading server 12 via the terminal 11, the merchant trading server 12 obtains the identifier of the user in the merchant trading system 10. Also, the user may appoint the payment platform system 50 via the terminal 11. Therefore, the merchant trading server 12 sends the identifier of the merchant, the identifier of the user in the merchant trading system 10 and the identifier of the user in the payment platform system 50 to the payment platform system 50. The payment platform system 50 also may verify the identifier of the user in the payment platform system 50.

In S202, the payment platform system 50 generates the predetermined payment deduction agreement according to the agreement signing request.

Specifically, the predetermined payment deduction agreement is authorized by the user for deducting money from a specified account or bank card (i.e. the bank system 30). Under the permission of user authorization, the merchant may initiate the deduction to the specified account or bank card (i.e. the bank system 30) automatically according to the user's instructions or service terms, thus achieving the one-click payment.

In an embodiment of the present disclosure, the predetermined payment deduction agreement also includes the identifier of the merchant, the identifier of the user in the merchant trading system 10 and the identifier of the user in the payment platform system 50.

In an embodiment of the present disclosure, each of the agreement signing request and the payment deduction agreement further includes a bank card bound for payment. With the bank card bound in the agreement signing request and the payment deduction agreement for payment, the user does not need to appoint the bank card again at a next payment, thus reducing procedure and improving efficiency.

After generating the predetermined payment deduction agreement, the payment platform system 50 may save the predetermined payment deduction agreement. In other words, the predetermined payment deduction agreement may be generated only once, and then the merchant may perform the deduction automatically according to the user's instructions and server items based on the predetermined payment deduction agreement.

In S203, the payment platform system 50 receives an agreement deduction request from the merchant trading system 10.

Specifically, if it is the first time for the user to use the merchant trading system 10, the merchant trading system 10 may send the agreement deduction request as it generates the predetermined payment deduction agreement, for example, when the user selects the product and pays for the product, he/she may send the agreement deduction request via the merchant trading system 10. If the payment platform system 50 has generated a corresponding payment deduction agreement i.e. the predetermined payment deduction agreement, the merchant trading system 10 may send the agreement deduction request directly.

In S204, the payment platform system 50 verifies the agreement deduction request.

In S205, after the agreement deduction request passes verification, the payment platform system 50 communicates with the bank system 30 so as to perform a deduction according to the agreement deduction request and the predetermined payment deduction agreement.

According to the electronic trading method in embodiments of the present disclosure, the predetermined payment deduction agreement is generated according to the agreement signing request, and may be generated only once, thus further reducing procedure and facilitating use.

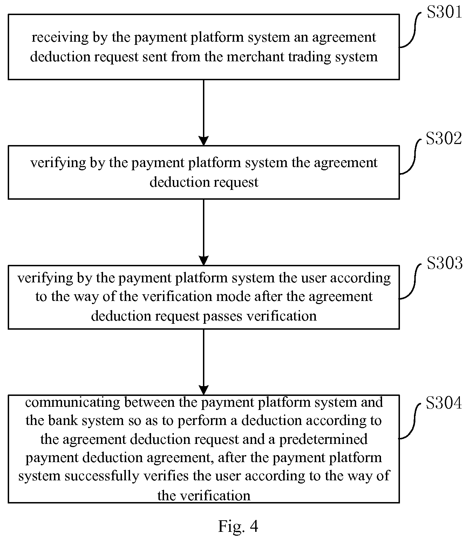

Fig. 4 is a flow chart showing an electronic trading method according to yet another embodiment of the present disclosure. In order to ensure the safety of the trading, the payment deduction agreement further includes a way of the verification, and the user is verified according to the way of the verification after the agreement deduction request passes verification.

As shown in Fig. 4, the electronic trading method includes following steps.

In S301, the payment platform system 50 receives an agreement deduction request sent from the merchant trading system 10.

In S302, the payment platform system 50 verifies the agreement deduction request.

In S303, the payment platform system 50 verifies the user according to the way of the verification, after the agreement deduction request passes verification.

In S304, after the user passes verification, the payment platform system 50 communicates with the bank system 30 so as to perform a deduction according to the agreement deduction request and a predetermined payment deduction agreement.

For example, the way of the verification may be message verification. A message including a verification code is sent to the user, and the deduction may be performed only when the verification code input is correct.

With the electronic trading method according to embodiments of the present disclosure, the user is verified according to the way of the verification after the agreement deduction request passes verification, thus further ensuring the safety of the trading.

In an embodiment of the present disclosure, the method may further include following steps. The payment platform system 50 receives an agreement cancellation request sent by the user via the merchant trading system 10, and the payment platform system 50 cancels the payment deduction agreement according to the agreement cancellation request.

With the electronic trading method according to embodiments of the present disclosure, the user may cancel the payment deduction agreement which has already been generated, thus further improving the user experience.

In order to make advantages of embodiments of the present disclosure more apparent, examples may be taken to explain below.

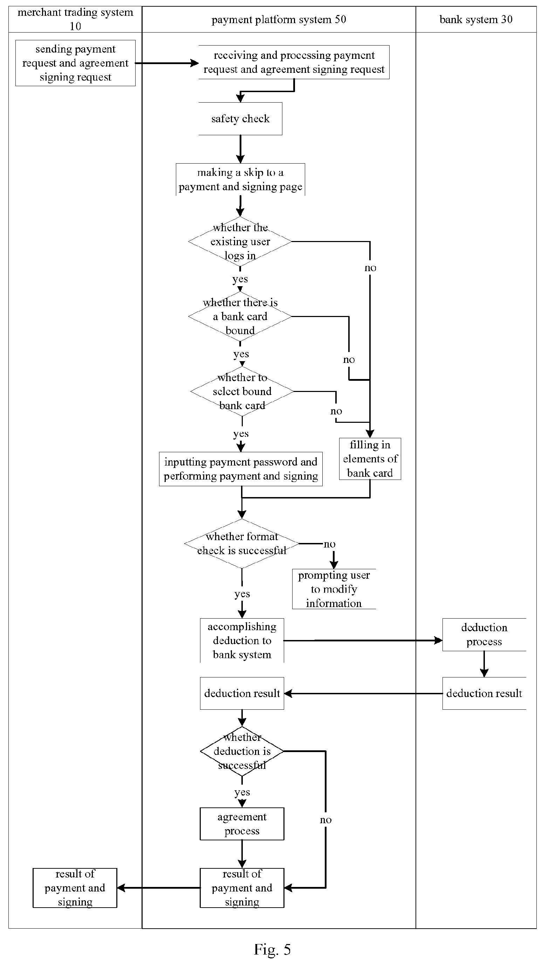

Fig. 5 is a flow chart showing a payment and signing according to an embodiment of the present disclosure, in which the payment and signing refers to generating the predetermined payment deduction agreement as paying. As shown in Fig. 5, the merchant trading server 12 sends the payment request and the agreement signing request, in which the identifier of the user in the merchant trading system 10 may be sent to the payment platform system 50 together with the order payment information. The payment platform system 50 processes the payment request and the agreement signing request, and makes a skip to a payment and signing page after the safety verification. Firstly, the payment platform system 50 judges whether there is a bank card bound by the user. If there is no bank card bound, the user needs to fill in elements of bank card, for example, a credit card number, a validity period, a reserved phone number, a name, and a national identification number. If there is the bank card bound, the user needs to fill in elements of payment, for example, a payment password and phone verification code of the credit card in the payment platform system 50. The user may confirm the payment and sign the agreement after filling in the payment information, and the payment platform system 50 accomplishes the deduction for the user via the bank system 30. After the deduction is accomplished successfully, the payment platform system 50 generates the predetermined payment deduction agreement according to "the identifier of the merchant, the identifier of the user in the merchant trading system 10 and the identifier of the user in the payment platform system 50" and saves the predetermined payment deduction agreement into a corresponding agreement library, returns information related with the successful payment and signing to the merchant and the user. If the payment fails, relevant failure information may be returned to the user, and the user may change the information and then submit the payment request and the agreement signing request again.

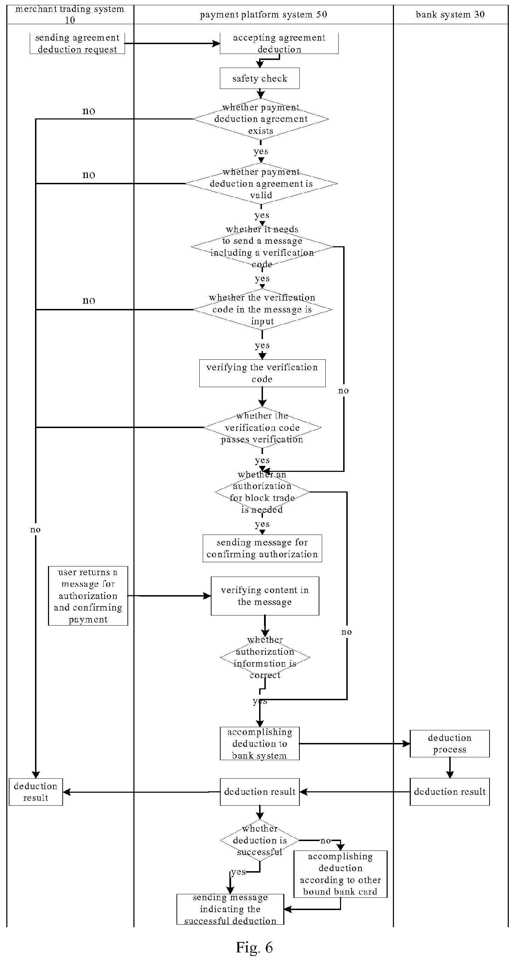

Fig. 6 is a flow chart showing an agreement deduction according to an embodiment of the present disclosure. As shown in Fig. 6, the merchant trading system 10 sends the agreement deduction request, and the payment platform system 50 performs the deduction process. Before deduction, the payment platform system 50 needs to perform a safety check and a format check before deduction, and verify a validity of the payment deduction agreement, i.e. judge whether the payment deduction agreement sent by the merchant exists in the agreement library. Then, the payment platform system 50 judges whether to send a message including the verification code to the user, by comparing the deduction amount in the current collecting order with "a limit amount" in the predetermined payment deduction agreement. If it needs to send the message including the verification code, the payment platform system 50 judges whether the verification code in the order information is correct, if yes, following procedure is performed, and if no, payment failure information is returned. If the predetermined payment deduction agreement requires the user to authorize the deduction, the payment platform system 50 sends a message for authorizing the deduction to the user's mobile phone, and performs the deduction if the user returns a message confirming the payment within the prescribed period. If the user does not return the message confirming the payment within the prescribed period or return a message rejecting the payment, the payment platform system 50 does not perform the deduction. The payment platform system 50 sends the deduction instruction to the bank system 30 and the bank system 30 returns the deduction result.

In order to achieve embodiments described above, the present disclosure also provides an electronic trading system.

The electronic trading system includes a merchant trading system used by a merchant, a trading gateway, a bank system, a payment gateway and a payment platform system, in which the merchant trading system includes a terminal used by a user and a merchant trading server, the payment platform system communicates with the merchant trading system via the trading gateway and communicates with the bank system via the payment gateway, and the payment platform system is configured to receive an agreement deduction request sent from the merchant trading system, to verify the agreement deduction request, and to communicate with the bank system so as to perform a deduction according to the agreement deduction request and a predetermined payment deduction agreement after the agreement deduction request passes verification.

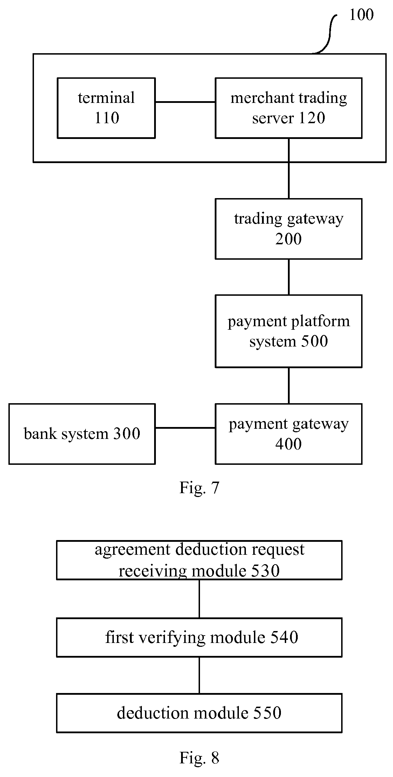

Fig. 7 is a schematic diagram showing an electronic trading system according to an embodiment of the present disclosure. As shown in Fig. 7, the electronic trading system includes a merchant trading system 100 used by a merchant, a trading gateway 200, a bank system 300, a payment gateway 400, and a payment platform system 500, in which the merchant trading system 100 includes a terminal 110 used by a user and a merchant trading server 120, the payment platform system 500 communicates with the merchant trading system 100 via the trading gateway 200 and communicates with the bank system 300 via the payment gateway 400.

Specifically, the payment platform system 500 is configured to receive an agreement deduction request sent from the merchant trading system 100, to verify the agreement deduction request, and to communicate with the bank system 300 so as to perform a deduction according to the agreement deduction request and a predetermined payment deduction agreement after the agreement deduction request passes verification.

More specifically, if it is the first time for the user to use the merchant trading system 100, the merchant trading system 100 may send the agreement deduction request as it generates a predetermined payment deduction agreement (which will be described in the following), for example, when the user selects the product and pays for the product, he/she may send the agreement deduction request via the merchant trading system 100. If the payment platform system 500 has generated a corresponding payment deduction agreement i.e. the predetermined payment deduction agreement (referring to following embodiments in detail), the merchant trading system 100 may send the agreement deduction request directly.

In an embodiment of the present disclosure, the payment platform system 500 is further configured to receive an agreement signing request sent by the user via the merchant trading system 100, and to generate the predetermined payment deduction agreement according to the agreement signing request. Specifically, the merchant trading server 120 is a server deployed by the merchant. Firstly, the user logs in the merchant trading server 120 via the terminal 110. Then, the user selects the product information via the terminal 110, and sends the agreement signing request during paying or sends the agreement signing request directly. The merchant trading system 100 receives the agreement signing request and then forwards it to the payment platform system 500. The terminal 110 may be a mobile terminal (for example, a smartphone), also may be a personal computer, etc.

The agreement signing request is a request from the user for signing the payment deduction agreement among three parties, i.e., the user, the merchant trading system 100 and the payment platform system 500. In an embodiment of the present disclosure, the agreement signing request includes at least one of an identifier of the merchant, an identifier of the user in the merchant trading system 100 and an identifier of the user in the payment platform system 500. The identifier of the merchant, for example, the identifier of Taobao website identifies the merchant solely. The identifier of the user in the merchant trading server 120 is a login account when the user logs in the merchant trading system 100, for example, the account of the user in the Taobao website. The identifier of the user in the payment platform system 500 is a login account when the user logs in the payment platform system 500, for example, an Alipay account. Specifically, after the user logs in the merchant trading server 120 via the terminal 110, the merchant trading server 120 obtains the identifier of the user in the merchant trading system 100. Also, the user may also appoint the payment platform system 500 via the terminal 110. Therefore, the merchant trading server 120 sends the identifier of the merchant, the identifier of the user in the merchant trading system 100 and the identifier of the user in the payment platform system 500 to the payment platform system 500. The payment platform system 500 also may verify the identifier of the user in the payment platform system 500.

In addition, the predetermined payment deduction agreement is authorized by the user for deducting money from a specified account or bank card (i.e. the bank system 300). Under the permission of user authorization, the merchant may initiate the deduction to the specified account or bank card (i.e. the bank system 300) automatically according to the user's instructions or service terms, thus achieving the one-click payment.

In an embodiment of the present disclosure, the predetermined payment deduction agreement also includes the identifier of the merchant, the identifier of the user in the merchant trading system 100 and the identifier of the user in the payment platform system 500.

In an embodiment of the present disclosure, each of the agreement signing request and the payment deduction agreement further includes a bank card bound for payment. With the bank card bound in the agreement signing request and the payment deduction agreement for payment, the user does not need to appoint the bank card again at a next payment, thus reducing procedures and improving efficiency.

After generating the predetermined payment deduction agreement, the payment platform system 500 may save the predetermined payment deduction agreement. In other words, the predetermined payment deduction agreement may be generated only once, and then the merchant may perform the deduction automatically according to the user's instructions and server items based on the predetermined payment deduction agreement.

In an embodiment of the present disclosure, the payment deduction agreement further includes an agreement validity period. The payment platform system 500 verifies the agreement deduction request according to the agreement validity period, thus further ensuring safety.

According to the electronic trading system in embodiments of the present disclosure, with the predetermined payment deduction agreement, the merchant trading system may directly deduct the payment according to the user's instruction or service terms in the agreement, without making a skip to the third-party payment platform, thus reducing procedure, being convenient, safe and efficient. In addition, if the network timeout occurs, the user only needs to send the agreement deduction request again, without the need of returning to the shopping cart for re-ordering and re-paying, thus improving the user experience and enhancing the success rate of payment. In addition, auto renew may be provided for the user, for example, it may help the user to automatically buy membership services, thus further improving the user experience.

In order to ensure the safety of the trading, the payment deduction agreement further includes a way of the verification, and the user may be verified according to the way of the verification after the agreement deduction request passes verification. In an embodiment of the present disclosure, the predetermined payment deduction agreement further includes a way of the verification, and the payment platform system 500 is further configured to verify the user according to the way of the verification after the agreement deduction request passes verification. For example, the way of the verification may be message verification. A message including the verification code is sent to the user, and the deduction may be performed only when the verification code input is correct. In this way, the user may be verified according to the way of the verification after the agreement deduction request passes verification, thus further ensuring the safety of the trading.

In an embodiment of the present disclosure, the payment platform system 500 is further configured to receive an agreement cancellation request sent by the user via the merchant trading system 100 and to cancel the payment deduction agreement according to the agreement cancellation request.

In order to achieve embodiments described above, the present disclosure also provides a payment platform system.

The payment platform system includes: an agreement deduction request receiving module, configured to receive an agreement deduction request sent from a merchant trading system; a first verifying module, configured to verify the agreement deduction request; and a deduction module, configured to communicate with a bank system so as to perform a deduction according to the agreement deduction request and a predetermined payment deduction agreement, after the agreement deduction request passes verification.

Fig. 8 is a schematic diagram showing a payment platform system according to an embodiment of the present disclosure. As shown in Fig. 8, the payment platform system includes an agreement deduction request receiving module 530, a first verifying module 540 and a deduction module 550.

Specifically, the agreement deduction request receiving module 530 is configured to receive an agreement deduction request sent from a merchant trading system. More specifically, if it is the first time for the user to use the merchant trading system, the merchant trading system may send the agreement deduction request as it generates a predetermined payment deduction agreement (which will be described in the following), for example, when the user selects the product and pays for the product, he/she may send the agreement deduction request via the merchant trading system. If the payment platform system has generated a corresponding payment deduction agreement i.e. the predetermined payment deduction agreement (referring to following embodiments in detail), the merchant trading system may send the agreement deduction request directly.

In an embodiment of the present disclosure, the payment deduction agreement further includes an agreement validity period. The payment platform system verifies the agreement deduction request according to the agreement validity period, thus further ensuring safety.

The first verifying module 540 is configured to verify the agreement deduction request. The deduction module 550 is configured to communicate with a bank system so as to perform a deduction according to the agreement deduction request and the predetermined payment deduction agreement, after the agreement deduction request passes verification.

According to the payment platform system in embodiments of the present disclosure, with the predetermined payment deduction agreement, the merchant trading system may directly deduct the payment according to the user's instruction or service terms in the agreement, without making a skip to the third-party payment platform, thus reducing procedure, being convenient, safe and efficient. In addition, if the network timeout occurs, the user only needs to send the agreement deduction request again, without the need of returning to the shopping cart for re-ordering and re-paying, thus improving the user experience and enhancing the success rate of payment. In addition, auto renew may be provided for the user, for example, it may help the user to automatically buy membership services, thus further improving the user experience.

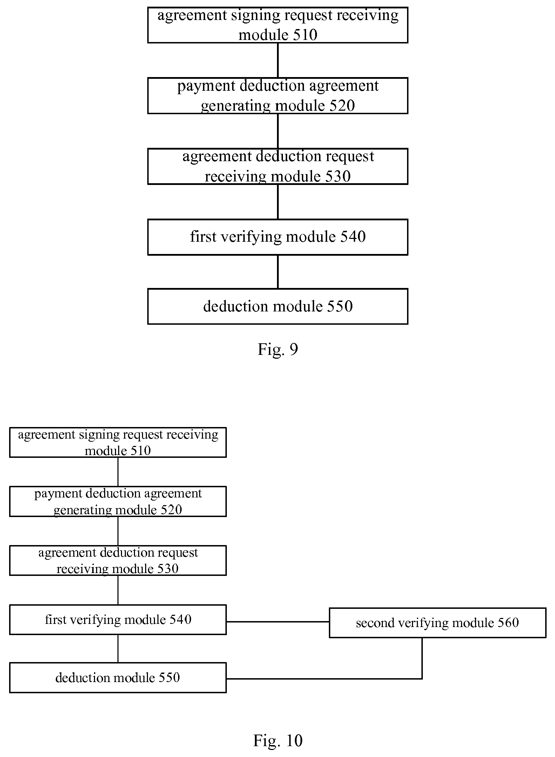

Fig. 9 is a schematic diagram showing a payment platform system according to another embodiment of the present disclosure. As shown in Fig. 9, the payment platform system further includes an agreement signing request receiving module 510 and a payment deduction agreement generating module 520 based on Fig. 8.

Specifically, the agreement signing request receiving module 510 is configured to receive an agreement signing request sent by a user via the merchant trading system. More specifically, the merchant trading system includes a terminal used by the user and a merchant trading server. Firstly, the user logs in the merchant trading server via the terminal. Then, the user selects the product information via the terminal and sends the agreement signing request during paying or sends the agreement signing request directly. The merchant trading system receives the agreement signing request and then forwards it to the payment platform system.

The agreement signing request is a request from the user for signing the payment deduction agreement among three parties, i.e., the user, the merchant trading system, and the payment platform system. In an embodiment of the present disclosure, the agreement signing request includes at least one of an identifier of the merchant, an identifier of the user in the merchant trading system and an identifier of the user in the payment platform system. The identifier of the merchant, for example, the identifier of Taobao website, identifies one merchant solely. The identifier of the user in the merchant trading system is a login account when the user logs in the merchant trading server, for example, the account of the user in the Taobao website. The identifier of the user in the payment platform system is a login account when the user logs in the payment platform system, for example, an Alipay account. Specifically, after the user logs in the merchant trading server via the terminal, the merchant trading server obtains the identifier of the user in the merchant trading system. Also, the user may also appoint the payment platform system via the terminal. Therefore, the merchant trading server sends the identifier of the merchant, the identifier of the user in the merchant trading system and the identifier of the user in the payment platform system to the payment platform system. The payment platform system also may verify the identifier of the user in the payment platform system.

The payment deduction agreement generating module 520 is configured to generate the predetermined payment deduction agreement according to the agreement signing request. Specifically, the predetermined payment deduction agreement is authorized by the user for deducting money from a specified account or bank card (i.e. the bank system). Under the permission of user authorization, the merchant may initiate the deduction to the specified account or bank card (i.e. the bank system) automatically according to the user's instructions or service terms, thus achieving the one-click payment.

In an embodiment of the present disclosure, the predetermined payment deduction agreement also includes the identifier of the merchant, the identifier of the user in the merchant trading system and the identifier of the user in the payment platform system.

In an embodiment of the present disclosure, each of the agreement signing request and the payment deduction agreement further includes a bank card bound for payment. With the bank card bound in the agreement signing request and the payment deduction agreement for payment, the user does not need to appoint the bank card again at a next payment, thus reducing procedures and improving efficiency.

After generating the predetermined payment deduction agreement, the payment platform system may save the predetermined payment deduction agreement. In other words, the predetermined payment deduction agreement may be generated only once, and then the merchant may perform the deduction automatically according to the user's instructions and server items based on the predetermined payment deduction agreement.

Fig. 10 is a schematic diagram showing a payment platform system according to yet another embodiment of the present disclosure. As shown in Fig. 10, the payment platform system further includes a second verifying module 560 based on Fig. 9.

Specifically, the payment deduction agreement further includes a way of the verification, and the second verifying module 560 is configured to verify the user according to the way of the verification after the agreement deduction request passes verification. For example, the way of the verification may be message verification. A message including the verification code is sent to the user, and the deduction may be performed only when the verification code input is correct.

Therefore, the user may be verified according to the way of the verification after the agreement deduction request passes verification, thus further ensuring the safety of the trading.

In an embodiment of the present disclosure, the payment platform system further includes an agreement cancellation request receiving module and a payment deduction agreement cancelling module (not shown). Specifically, the agreement cancellation request receiving module is configured to receive an agreement cancellation request sent by a user via the merchant trading system, and the payment deduction agreement cancelling module is configured to cancel the payment deduction agreement according to the agreement cancellation request.

The logic and/or steps described in other manners herein or shown in the flow chart, for example, a particular sequence table of executable instructions for realizing the logical function, may be specifically achieved in any computer readable medium to be used by the instruction execution system, device or equipment (such as the system based on computers, the system comprising processors or other systems capable of obtaining the instruction from the instruction execution system, device and equipment and executing the instruction), or to be used in combination with the instruction execution system, device and equipment. As to the specification, "the computer readable medium" may be any device adaptive for including, storing, communicating, propagating or transferring programs to be used by or in combination with the instruction execution system, device or equipment. More specific examples of the computer readable medium comprise but are not limited to: an electronic connection (an electronic device) with one or more wires, a portable computer enclosure (a magnetic device), a random access memory (RAM), a read only memory (ROM), an erasable programmable read-only memory (EPROM or a flash memory), an optical fiber device and a portable compact disk read-only memory (CDROM). In addition, the computer readable medium may even be a paper or other appropriate medium capable of printing programs thereon, this is because, for example, the paper or other appropriate medium may be optically scanned and then edited, decrypted or processed with other appropriate methods when necessary to obtain the programs in an electric manner, and then the programs may be stored in the computer memories.

It should be understood that each part of the present disclosure may be realized by the hardware, software, firmware or their combination. In the above embodiments, a plurality of steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

Those skilled in the art shall understand that all or parts of the steps in the above exemplifying method of the present disclosure may be achieved by commanding the related hardware with programs. The programs may be stored in a computer readable storage medium, and the programs comprise one or a combination of the steps in the method embodiments of the present disclosure when run on a computer.

In addition, each function cell of the embodiments of the present disclosure may be integrated in a processing module, or these cells may be separate physical existence, or two or more cells are integrated in a processing module. The integrated module may be realized in a form of hardware or in a form of software function modules. When the integrated module is realized in a form of software function module and is sold or used as a standalone product, the integrated module may be stored in a computer readable storage medium.

The storage medium mentioned above may be read-only memories, magnetic disks or CD, etc.

Reference throughout this specification to "an embodiment," "some embodiments," "one embodiment", "another example," "an example," "a specific example," or "some examples," means that a particular feature, structure, material, or characteristic described in connection with the embodiment or example is included in at least one embodiment or example of the present disclosure. Thus, the appearances of the phrases such as "in some embodiments," "in one embodiment", "in an embodiment", "in another example," "in an example," "in a specific example," or "in some examples," in various places throughout this specification are not necessarily referring to the same embodiment or example of the present disclosure. Furthermore, the particular features, structures, materials, or characteristics may be combined in any suitable manner in one or more embodiments or examples.

Although explanatory embodiments have been shown and described, it would be appreciated by those skilled in the art that the above embodiments cannot be construed to limit the present disclosure, and changes, alternatives, and modifications can be made in the embodiments without departing from scope of the present disclosure.

## Claims

1. An electronic trading method, wherein the method is performed on:
a merchant trading system used by a merchant and comprising a terminal used by a user and a merchant trading server;
a trading gateway;
a bank system;
a payment gateway; and
a payment platform system communicating with the merchant trading system via the trading gateway and communicating with the bank system via the payment gateway,
the method comprises:
receiving by the payment platform system an agreement deduction request sent from the merchant trading system;
verifying by the payment platform system the agreement deduction request;
communicating between the payment platform system and the bank system so as to perform a deduction according to the agreement deduction request and a predetermined payment deduction agreement, after the agreement deduction request passes verification.

2. The electronic trading method according to claim 1, wherein, before receiving by the payment platform system the agreement deduction request sent from the merchant trading system, the method further comprises:
receiving by the payment platform system an agreement signing request sent by the user via the merchant trading system; and
generating by the payment platform system the predetermined payment deduction agreement according to the agreement signing request.

3. The electronic trading method according to claim 1, wherein each of the agreement signing request and the payment deduction agreement comprises at least one of an identifier of the merchant, an identifier of the user in the merchant trading system and an identifier of the user in the payment platform system.

4. The electronic trading method according to claim 3, wherein each of the agreement signing request and the payment deduction agreement further comprises a bank card bound for payment.

5. The electronic trading method according to claim 1, wherein the payment deduction agreement further comprises an agreement validity period, and the payment platform system verifies the agreement deduction request according to the agreement validity period.

6. The electronic trading method according to claim 1, wherein the payment deduction agreement further comprises a way of the verification, and the method further comprises:
verifying by the payment platform system the user according to the way of the verification, after the agreement deduction request passes verification.

7. The electronic trading method according to claim 1, further comprising:
receiving by the payment platform system an agreement cancellation request sent by a user via the merchant trading system; and
cancelling by the payment platform system the payment deduction agreement according to the agreement cancellation request.

8. An electronic trading system, comprising a merchant trading system used by a merchant, a trading gateway, a bank system, a payment gateway and a payment platform system, wherein the merchant trading system comprises a terminal used by a user and a merchant trading server, the payment platform system communicates with the merchant trading system via the trading gateway and communicates with the bank system via the payment gateway,
the payment platform system is configured to receive an agreement deduction request sent from the merchant trading system, to verify the agreement deduction request, and to communicate with the bank system so as to perform a deduction according to the agreement deduction request and a predetermined payment deduction agreement after the agreement deduction request passes verification.

9. The electronic trading system according to claim 8, wherein the payment platform system is further configured to receive an agreement signing request sent by a user via the merchant trading system, and to generate the predetermined payment deduction agreement according to the agreement signing request.

10. The electronic trading system according to claim 8, wherein each of the agreement signing request and the payment deduction agreement comprises at least one of an identifier of the merchant, an identifier of the user in the merchant trading system and an identifier of the user in the payment platform system.

11. The electronic trading system according to claim 10, wherein each of the agreement signing request and the payment deduction agreement further comprises a bank card bound for payment.

12. The electronic trading system according to claim 8, wherein the payment deduction agreement further comprises an agreement validity period, and the payment platform system is configured to verify the agreement deduction request according to the agreement validity period.

13. The electronic trading system according to claim 8, wherein the payment deduction agreement further comprises a way of the verification, and the payment platform system is further configured to verify the user according to the way of the verification after the agreement deduction request passes verification.

14. The electronic trading system according to claim 8, wherein the payment platform system is further configured to receive an agreement cancellation request sent by a user via the merchant trading system, and to cancel the payment deduction agreement according to the agreement cancellation request.

15. A payment platform system, comprising:
an agreement deduction request receiving module, configured to receive an agreement deduction request sent from a merchant trading system;
a first verifying module, configured to verify the agreement deduction request;
a deduction module, configured to communicate with a bank system so as to perform a deduction according to the agreement deduction request and a predetermined payment deduction agreement, after the agreement deduction request passes verification.

16. The payment platform system according to claim 15, further comprising:
an agreement signing request receiving module, configured to receive an agreement signing request sent by a user via the merchant trading system; and
a payment deduction agreement generating module, configured to generate the predetermined payment deduction agreement according to the agreement signing request.

17. The payment platform system according to claim 15, wherein each of the agreement signing request and the payment deduction agreement comprises at least one of a merchant identifier, an identifier of the user in the merchant trading system and an identifier of the user in the payment platform system.

18. The payment platform system according to claim 17, wherein each of the agreement signing request and the payment deduction agreement further comprises a bank card bound for payment.

19. The payment platform system according to claim 15, wherein the payment deduction agreement further comprises an agreement validity period, the first verifying module is further configured to verify the agreement deduction request according to the agreement validity period.

20. The payment platform system according to claim 15, wherein the payment deduction agreement further comprises a way of the verification, and the payment platform system further comprises:
a second verifying module, configured to verify the user according to the way of the verification.

21. The payment platform system according to claim 15, further comprising:
an agreement cancellation request receiving module, configured to receive an agreement cancellation request sent by a user via the merchant trading system; and
a payment deduction agreement cancelling module, configured to cancel the payment deduction agreement according to the agreement cancellation request.
